# EUROPÄISCHE PATENTSCHRIFT

(11) **EP 0 472 550 B1**
(45) Veröffentlichungstag und Bekanntmachung des Hinweises auf die Patenterteilung: **01.12.1993**
(21) Anmeldenummer: 90906911.4
(22) Anmeldetag: 17.05.1990
(51) Int. Cl.: A61C 13/00, A61C 13/20

(54) **ZAHNTECHNISCH-PROTHETISCHES ANGUSSVERFAHREN UND PRIMÄRTEIL HIERFÜR**
CASTING-ON PROCESS FOR MANUFACTURING DENTAL PROSTHESES AND PRIMARY PART FOR SAID PROCESS
PROCEDE DE COULEE POUR FABRIQUER DES PROTHESES DENTAIRES, ET PIECE PRIMAIRE A CET EFFET

(30) Priorität: 20.05.1989 DE 3916562
(43) Veröffentlichungstag der Anmeldung: 04.03.1992
(73) Patentinhaber: Wall, Giselher, Dr., D-97688 Bad Kissingen (DE)
(72) Erfinder: WALL, Giselher, D-8730 Bad Kissingen (DE); LUTZMANN, Manfred, D-3008 Garbsen 4 (DE)
(74) Vertreter: KUHNEN, WACKER & PARTNER
(86) Internationale Anmeldenummer: DE9000370
(87) Internationale Veröffentlichungsnummer: WO9014053

(56) Entgegenhaltungen:
- DE-A- 3 622 511

## Beschreibung

Die Erfindung betrifft ein zahntechnisch-prothetisches Angußverfahren gemäß Patentanspruch 1. Die Erfindung betrifft weiterhin ein zahntechnisch-prothetisches Primärteil, das für das genannte Angußverfahren geeignet ist, gemäß Patentanspruch 10.

Alternativ zur Löt-, Schweiß-, Klebe- und Steckverbindung können Zahnersatz-Bauteile durch Angießen gefügt werden. Wird hierbei ein metallischer Verbund mit geschlossener Fuge gefordert, so besteht der Fügepartner, an welchen angegossen werden soll (nachfolgend als "Primärteil" bezeichnet) und der anzugießende Fügepartner (nachfolgend als "Sekundärteil" bezeichnet) aus einer Legierung, welche aus reinen Edelmetallen aufgebaut ist. In der Regel werden hochkarätige, kupferfreie, platin- und iridiumhaltige Goldlegierungen verwendet (vergleiche Lindigkeit in: G. K. Siebert: Dentallegierungen in der zahnärztlichen Prothetik, 1989, S. 88). Werden oxidierende Legierungen, z. B. eine Kobalt- oder Nickelbasislegierung verwendet, entsteht bei entsprechend retentiver Gestaltung der Fügepartner ein zunächst fester Verbund. Dieser weist jedoch in Folge der Isolationswirkung der Oxidschichten auf den Fügepartnern bis auf wenige Verschweipungspunkte eine metallisch offene Fuge auf, welche im Mund alsbald durch Spaltkorrosion angegriffen und erweitert wird. Die ursprünglich festgefügten Teile können im Laufe der Zeit eine deutlich sicht- und spürbare Spielpassung entwickeln, welche die Präzision des Prothesensitzes zunichte macht.

Zahlreiche Zahnersatzaufgaben sind nicht im Einstück-Gußverfahren lösbar. Gegenüber dem Löten oder Schweißen vermeidet das Angußverfahren die zusätzlichen, mit der Herstellung eines Lötsockels verbundenen Übertragungsfehlerquellen, wodurch Zeit und Kosten gespart werden können. Der metallische Angußverbund mit oxidierenden Dentallegierungen (edelmetallfreien Legierungen, NEM) wird im gegenwärtigen Stand der Technik nicht für möglich gehalten.

Der Erfindung liegt daher die Aufgabe zugrunde, ein zahntechnisch-prothetisches Angußverfahren zur Verfügung zu stellen, bei dem die störende Oxid- oder Passivierungsschicht oxidbildender Legierungen (NEM) unter Angußbedingungen nicht auftritt.

Diese Aufgabe wird erfindungsgemäß bei einem zahntechnischprothetischen Angußverfahren, bei dem man ein Sekundärteil aus Metall an ein Primärteil aus Metall angießt, dadurch gelöst, daß man ein Primärteil aus einer oxidbildenden Metallegierung verwendet, in dessen Angußoberfläche man vor dem Anguß mit einem reduzierenden Metalloid eine feste Lösung bildet. Als reduzierende Metalloide werden vorzugsweise Bor, Silizium oder Phosphor verwendet. Ein solches Metalloid läßt man vor dem Angußverfahren in das Oberflächengitter des Primärteils eindiffundieren. Vorteilhaft erfolgt dies unter Zuhilfenahme eines Halogenids, z. B. von Lithiumfluorid LiF. Dabei kann man die Metalloide Bor oder Silizium in elementarer Form einsetzen. Man kann das Metalloid aber auch in Form einer reaktionsfähigen Verbindung einsetzen. Weitere bevorzugte Ausführungsvormen sind in den Unteransprüchen 7 bis 9 angeführt.

Die Aufgabe wird weiterhin durch ein zahntechnisch-prothetisches Primärteil für das Angußverfahren gelöst, das dadurch gekennzeichnet ist, daß es aus einer oxidbildenden Dentallegierung (NEM) besteht, die in der Angußoberfläche einen Gehalt an Bor und/oder Silizium und/oder Phosphor aufweist.

Erfindungsgemäß lassen sich unter anderem die folgenden Vorteile erreichen:
- es ist ein metallischer Angußverbund von einem Primärteil aus einer edelmetallfreien (NEM) Legierung mit einem Sekundärteil aus einer edelmetallfreien (NEM) Legierung möglich;
- es ist aber auch ein metallischer Angußverbund von einem Primärteil aus einer edelmetallfreien (NEM) Legierung mit einem Sekundärteil aus einem Edelmetall möglich;
- die Vorbereitung des Primärteils aus NEM-Legierung für den Anguß an das Sekundärteil aus NEM-Legierung und der Anguß selbst kann in jedem zahntechnischen Labor durchgeführt werden;
- die Vorbereitung des Primärteils für den Anguß kann aber auch beim Hersteller des Primärteils serienmäßig ausgeführt werden.

Weitere Vorteile der Erfindung lassen sich der folgenden Beschreibung, den Figuren und den Ansprüchen entnehmen.

Ein Primärteil kann z. B. in Form eines Wurzelstiftes vorliegen. Gemäß einer anderen Ausführungsform kann das Primärteil in Form eines zahntechnisch-prothetischen Hilfsteils zur Herstellung einer beidseitigen Angußverbindung mit oxidbildenden dentalen Gußlegierungen bestehen, das aus einer Platte mit mindestens einem peripher herausragenden Verankerungsarm zur Verankerung in der Einbettmasse besteht.

Die erfindungsgemäß vorgeschlagene Lösung der genannten Aufgabe ist sehr vielseitig, so daß zahlreiche verschiedenartige Anwendungsmöglichkeiten bestehen. Hierzu gehören verschiedenartige konfektionierte Attachments, wie z. B. ein Geschiebe, Druckknopfmechanismus, Gelenk, Steg, Regelmechanismus und andere zahnmedizinische Hilfsteile, wie z. B. ein Wurzelstift oder ein Brückengerüst.

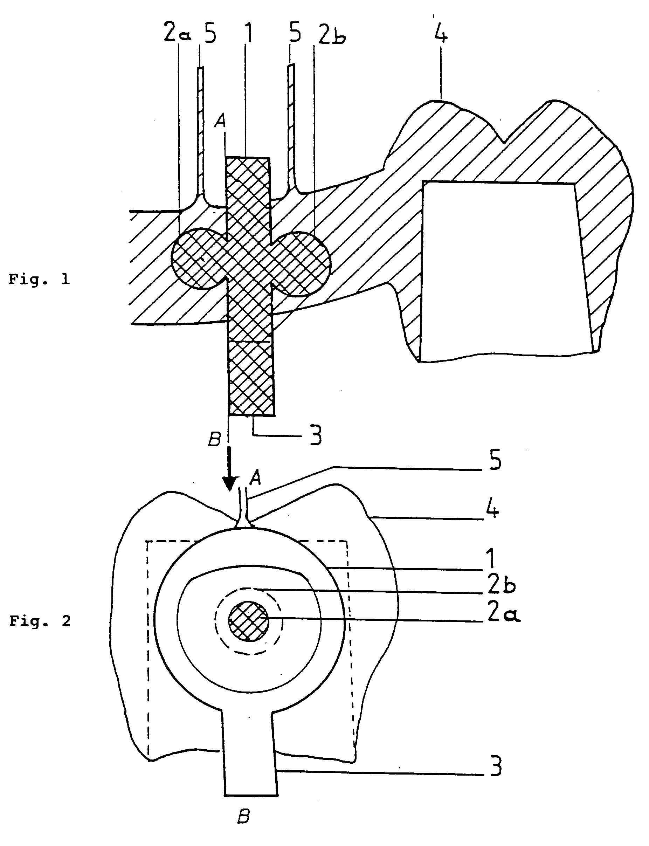

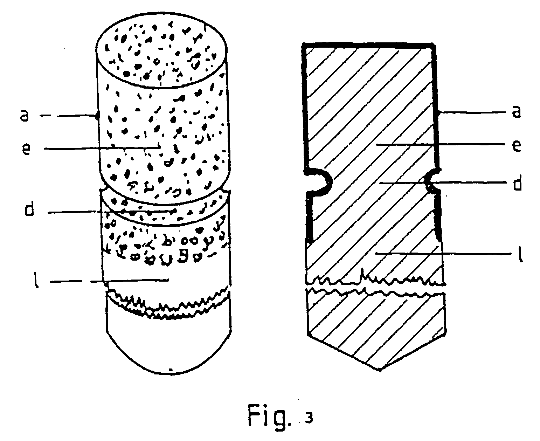

Die Fig. 1 und 2 stellen angußfähig gemachte Hilfsteile aus einer NEM-Legierung dar. Fig. 3 zeigt einen angußfähigen Wurzelstift gemäß der Erfindung.

Als NEM-Legierung werden insbesondere Kobalt-, Nickel-, Eisen-, Chrom- oder Niobbasislegierungen eingesetzt. Als Desoxidationsmittel eignen sich einige Metalloide, welche sich teilreversibel in das oberflächliche Legierungsgitter eindiffundieren lassen und bei Angußtemperaturen von etwa 1100°c bis 1500°C (je nach Legierung) in situ eine ausreichende Desoxidationswirkung entfalten. Damit ist eine einwandfreie metallische Verschmelzung von Primärteil und Sekundärteil durch Anguß gewährleistet, so daß beim vorgeschlagenen Verfahren die Vorteile der Angußtechnik auch bei Verwendung oxidbildender Dentallegierungen, insbesondere bei Einsatz der NEM-Legierungen nutzbar sind.

Daher läßt sich erfindungsgemäß ein Sekundärteil aus einer NEM-Legierung an ein Primärteil aus einer NEM-Legierung ohne Schwierigkeiten angießen. Falls gewünscht, kann an das erfindungsgemäße Primärteil jedoch auch ein Sekundärteil aus einer üblichen Goldlegierung angegossen werden.

Im Stand der Technik sind zahlreiche Verfahrensweisen bekannt, die eine oberflächliche Metalloid-, insbesondere Boranreicherung in einem Werkstück zum Ziel haben. Der Zweck dieser bekannten Methoden besteht darin, durch eine möglichst tief in das Basismaterial hineinreichende Hartstoffschicht zu einer Verbesserung der Abriebfestigkeit und/oder der Korrosionseigenschaften zu kommen. Die notwendigen Einwirkungsdauern der borierenden Medien liegen bei Stunden bis zu einigen Tagen. Dagegen bezweckt das erfindungsgemäße Verfahren nicht eine derartige Schichtbildung, und die Einwirkungsdauer des angewandten Metalloids beträgt einen nur vergleichsweise sehr kurzen Zeitraum in der Größenordnung von 0,1 bis 10 min, insbesondere 1 min. Weiterhin müssen die Schichtbildungen auf der Oberfläche beim erfindungsgemäßen Verfahren restlos abgetragen werden, wie unten erläutert wird.

Damit nicht bereits gegen Ende der Vorwärmphase mit Temperaturen zwischen 900°C und 950°C eine unnötige Reaktionen mit der Ofenatmosphäre stattfindet und so die Desoxidationskapazität des eindiffundierten Bors nicht vorzeitig durch Reaktion mit der Vorwärmofenatmosphäre erschöpft wird, kann mit einer graphithaltigen Gußformmasse und einem dünnen Platinschutzfilm auf der Metalloidpräparierten Primärteiloberfläche gearbeitet werden. Die Verwendung eines Metalloid-präparierten Retentionsteiles ermöglicht die räumliche Trennung der für unterschiedliche Legierungen gedachten Hohlsysteme in einer gemeinsamen Form, welche sukzessiv ausgegossen, über den beidseitigen Anguß am Retentionsteil ein gemeinsames Verbundobjekt liefert.

Diffundiert man in einer bevorzugten Ausführungsform der Erfindung das Element Bor als Metalloid in die Primärteiloberfläche ein, so können selbst Nickelbasislegierungen mit bis zu etwa 2 % Aluminiumgehalt, welche durch besonders widerstandsfähige Passiv- und Oxidschichten gekennzeichnet sind, einwandfrei durch Anguß metallisch verbunden werden.

Statt des elementaren Bors kann alternativ mit Borkarbid, statt des elementaren Siliziums auch mit einer reaktiven, hochsilizierten Zintl-Phase, z. B. des Chroms oder anderer Übergangsmetalle, gearbeitet werden. Das Metalloid soll lediglich physikalisch, als Legierungsbestandteil, in das Oberf lächengitter eingebaut werden, ohne stöchiometrischen oder anderweitigen chemischen Gesetzmäßigkeiten folgende Verbindungen vom Typ der Zintl-Phasen oder Hartstoffe zu bilden. Solche Phasen oder Stoffe würden zu Isolationsschichten und -zonen führen, die einen Anguß vereiteln.

Beim erfindungsgemäßen Verfahren kann vorteilhaft ein Halogenid verwendet werden. Ein solches, wie z . B. Lithiumfluorid, bildet mit dem Metalloid eine flüchtige und hochreaktive Metalloid-Halogenid-Verbindung (z. B. Bor- oder Siliziumfluorid), von der angenommen wird, daß sie unter den Verfahrensbedingungen vermutlich nach einem Platzwechselmechanismus in die Metalloberfläche eindiffundiert werden kann. Das Halogen hat beim erfindungsgemäßen Verfahren daher anscheinend eine Vehikelfunktion. Durch den Halogenangriff können die benutzten Reaktanden besonders einfach zur erfindungsgemäß gewünschten Reaktion veranlaßt werden.

Dementsprechend ist das Verbringen des Metalloids in die Primärteiloberfläche mittels der Halogenverbindungen, wie auch der Metalloidwasserstoffe möglich. Die schlechte Handdhabbarkeit, wie auch Giftigkeit der Metalloidhalogenide, wie auch Metalloidwasserstoffe machen den Weg der in-situ-Bildung der entsprechenden Halogenverbindungen aus den Elementen durch Einsatz eines hochschmelzenden salzförmigen halogenides, bevorzugt fluorides und einer Metall-Metalloidphase in der Hitze am einfachsten gangbar.

Die Desoxidation der Primärteiloberfläche wird über die Elemente Bor, Silizium bzw. Phosphor selbst bewirkt, vermutlich so, daß diese in das oberflächliche Metallgitter des Primärteils als zusätzliche Legierungsbestandteile im Sinne einer lokalen Mikrolegierung eindiffundieren. Als Quelle der drei Metalloide können neben den reinen Elementen auch solche Verbindungen eingesetzt werden, welche Bor, Phosphor oder Silizium abzugeben vermögen. Die Anzahl und Art solcher einsetzbarer Verbindungen ist unübersehbar groß. Allein schon die Anzahl der Boride ist kaum übersehbar, so daß der Fachmann aus entsprechendem Tabellenmaterial geeignete Substanzen entsprechend seinen speziellen Legierungsanforderungen aufgrund ihres weniger stabilen elementaren Kristallbaues heraussuchen kann. Der genannte Halogenzusatz kann aber auch solche Metalloid-Verbindungen zur gewünschten Reaktion bringen, die man unter anderen Bedingungen als "refraktär" ansieht; jedoch können die Reaktionszeiten dann wesentlich länger sein, als oben angegeben.

Geeignete Metalloidphase sind die Silizide, Boride und Phosphide aller Erdalkali- und Nebengruppenmetalle, sofern sie ausreichend hitze- und wasserbeständig sind. Ferner kommen Si-carbid und B-carbid in Frage. Zur Dotierung von Goldlegierungen braucht die Hitzebeständigeit nur bis etwa 600°C zu reichen, bei mindestens 1000°C soll sie für NEM- und Pd-Legierungen liegen.

Sofern z. B. aus Kostengründen nicht mit elementaren Metalloiden gearbeitet wird, wird die Auswahl der Metalloidquelle so getroffen, daß als metallischer partner der Metalloidphase ein Metall gewählt wird, das in der zu dotierenden Legierung ohnehin vorkommt, oder für diese sehr wichtig ist. Z. B. wird bei NEM-Legierungen mit Chromboriden und -siliziden gearbeitet, für Goldlegierungen kommt Kupferphosphid in Frage.

Das Metalloid Bor, Silizium und/oder Phosphor dringt beim erfindungsgemäßen Verfahren nur in die Oberfläche des Primärteils aus NEM-Legierung ein. Nach den vorliegenden Versuchsergebnissen beträgt die Eindringtiefe bis zu etwa 200 µm, insbesondere 0,1 bis 50 µm, vorzugsweise 10 bis 20 µm.

Die Versäuberung des Primärteils nach der Reaktion von Überresten und Reaktionsprodukten der Reaktanden ist deshalb notwendig, weil nur strukturgebundenes Metalloid auf im theoretischen Idealfall einsamen, einzelnen Gitterplätzen in der Oberfläche erwünscht ist; denn nur dieses kann bei Angußtemperaturen reagieren. Restbestände der Reaktionspartner auf der Primärteiloberfläche stören, da sie infolge Ketten- und Aggregatbildung der Metalloidatome untereinander reagieren. Sie wären daher großenteils für Metalle nicht benetzbar. Die Metalloid-Verbindungen können beim erfindungsgemäßen Verfahren lediglich als Quelle für das Metalloid selbst eingesetzt werden und verbleiben daher keinesfalls auf der Primärteiloberfläche.

Schliffbilder von erfindungsgemäß angegossenen Strukturen zeigen neben einer einwandfreien metallischen Verbindung der Partner, daß die Reaktionsprodukte, soweit sie im Metall löslich sind, vermutlich als Boride in das Kristallgefüge eingebaut werden und anderenfalls in Form unlöslicher Schlacke aus der Angußfuge in die Einbettmasse verdrängt werden.

Gemäß den Fig. 1 und 2 werden Hilfsteile aus NEM-Legierungen nach dem erfindungsgemäßen Verfahren angußfähig gemacht. Das Hilfsteil besteht aus einer beliebig gestalteten, hier rund ausgebildeten Platte (1), die beiderseits im Zentrum mindestens eine Retentionsvorrichtung 2a, 2b und am Rande mindestens einen hier beispielhaft armförmigen Verankerungsarm 3 trägt. Der Plattendurchmesser ist größer als der der Retentionsvorrichtungen. Als Konstruktionselement wird das Hilfsteil an der Verbindungsstelle der in unterschiedlichen Legierungen zu gießenden Partien desselben Zahnersatzes durch beidseitigen Anguß eingearbeitet, wo traditionell gelötet, geschweißt oder geklebt werden müßte. Das Hilfsteil wird z. B. bei einer teleskopierend verankerten Prothese in den Verbinder zwischen Außenteleskop 4 und Modellgußgerüst so einmodel-liert, so daß der Verankerungsarm 3 und die Peripherie der Platte 1 frei von Wachs bleiben, um nachfolgend von der Einbettmasse gefaßt zu werden. Die Retentionsvorrichtungen 2a, 2b werden vollständig und ausreichend dimensioniert (mindestens 0,5 mm dick) vom Modellierwachs des Gerüstes, wie des Verbinders 4 abgedeckt. Gerüst- wie Teleskopmodell erhalten getrennte Gußwege und Steiger 5. Dadurch entsteht für jede Legierung ein getrenntes Hohlraumsystem in der Gußform. Die räumliche Trennung wird durch die eingelegten Hilfsteile bewirkt, welche durch beiderseitigen Anguß die in unterschiedlichen Legierungen ausgeführten Zahnersatzpartien ohne besonderen Übertragungs- oder Lötvorgang zu einem einheitlichen Ganzen als modifizierten Einstückguß verbinden.

Gemäß Fig. 3 ist erfindungsgemäß ein handelsüblicher Zahnersatzbauteil aus einer oxidbildenden Legierung, nämlich ein Wurzelstift für einen Kronenkernaufbau bei fehlender natürlicher Zahnkrone angußfähig ausgerüstet. Der in den Zahnwurzelkanal versenkbare Wurzelanteil 1 des Stiftes muß nur in seinem kauflächennahen Anteil eine angußfähige Beschichtung a tragen. Er kann vom Kronenteil durch eine Taille abgesetzt sein, so daß der der Taille zuzuordnende Stiftanteil zu einem Verbinder d wird, welcher zum Kronenteil des Stiftes e überleitet, der als Retention des Wurzelstiftes an einen metallischen Kronenaufbau des Ersatzzahnes (nicht gezeichnet) angegossen wird. Neben dem kronennahen Abschnitt des Wurzelanteils des Stiftes ist auch der Verbinder d, wie die Retention e durch Auftrag einer angußfähigen Außenschicht zweischichtig aufgebaut.

Nachfolgend wird das erfindungsgemäße Verfahren beispielhaft für die angußfähige Ausrüstung der Primärteiloberfläche mit Bor beschrieben. Sinngemäß wird das Verfahren bei Verwendung von Silizium oder Phosphor modifiziert, wobei letzterer zweckmäßig als Metallphosphid, z. B. Kupfer- oder Manganphosphid gehandhabt werden kann. Der Methode des Borierens wird der Vorzug gegeben, da dadurch selbst die aluminiumhaltigen NEM-Legierungen, bis ca. 2 % Al, angußfähig werden.

### Ausführungsbeispiel

Feinstes, handelsübliches, amorphes Bor wird mit einer wässrigen, gesättigten Lithiumfluoridlösung zu einem Brei von Malfarbenkonsistenz verrührt und mit einem Haarpinsel satt deckend auf die Angußfläche des Primärteils aufgetragen. Das so vorbereitete Primärteil wird nach dem Trocknen im technischen Vakuum einer Rotorpumpe (Restdruck bis maximal 20 mbar ist unschädlich) für 1 Minute auf etwa 900 bis 950°C erhitzt. Es kann hierzu der zahntechnische Keramikofen oder auch ein mit Mikrowellenenergie induktiv beheizbarer Glaskolben dienen. Nach Abkühlen entfernt man die Borreste sowie jegliche Schlackenspur bis zum Freiliegen der metallischen Oberfläche durch Abstrahlen mit Korundpulver von 25 µm Korngröße und 3 bar Strahldruck.

Es ist von entscheidender Wichtigkeit, daß keinerlei Spuren der Reaktionskruste verbleiben, da diese beim Anguß isolierend wirken und eine metallische Verbindung verhindern. Die zusätzlich im Ultraschallbad (aqua dest., 70°C) für 3 min gereinigte und anschließend durch Abblasen mit gespanntem Dampf entfettete Primärteiloberfläche wird mit einer dünnen Schicht aus Platin überzogen. Diese wird z. B. durch thermische Zersetzung eines labilen Platinsalzes oder elektrolytisch durch Tauchen erzeugt. Eine Schichtdicke von einigen hundert nm, grob nach Interferenzfarben oder gerade wahrnehmbarer Spiegelbildung geschätzt, ist ausreichend.

## Patentansprüche

1. Zahntechnisch-prothetisches Angußverfahren, bei dem man ein Sekundärteil aus Metall an ein Primärteil aus Metall angießt, dadurch gekennzeichnet, daß man ein Primärteil aus einer oxidbildenden Metallegierung verwendet, in dessen Angußoberfläche man vor dem Anguß mit einem reduzierenden Metalloid eine feste Legierung bildet.

2. Verfahren nach Anspruch 1, dadurch gekennzeichnet, daß man als reduzierendes Metalloid Bor, Silizium oder Phosphor in das Oberflächengitter des Primärteils eindiffundieren läßt.

3. Verfahren nach Anspruch 2, dadurch gekennzeichnet, daß man das Metalloid unter Zuhilfenahme eines Halogenids in die Primärteiloberfläche eindiffundieren läßt.

4. Verfahren nach Anspruch 3, dadurch gekennzeichnet, daß man als Halogenid Lithiumfluorid LiF einsetzt.

5. Verfahren nach Anspruch 2, dadurch gekennzeichnet, daß man als Metalloid Bor oder Silizium in elementarer Form einsetzt.

6. Verfahren nach Anspruch 1 und/oder 2, dadurch gekennzeichnet, daß man das Metalloid in Form einer reaktionsfähigen Verbindung einsetzt.

7. Verfahren nach Anspruch 6, dadurch gekennzeichnet, daß man als reaktionsfähige Verbindung Borid, Silizid oder Phosphid in Form eines wäßrigen Breies einsetzt.

8. Verfahren nach Anspruch 7, dadurch gekennzeichnet, daß man den Metalloidbrei mit Lithiumfluorid-Lösung herstellt und deckend auf die metallisch saubere Primärteiloberfläche im Bereich der Angußzonen aufträgt, und das so präparierte Primärteil nach dem Trocknen in einem technischen Vakuum mit bis zu 20 mbar atmosphärischem Restdruck bei 900 bis 1000°C bei NEM-Legierungen, 600 bis 700°C bei Goldlegierungen während einer Minute reagieren läßt.

9. Verfahren nach einem der Ansprüche 1 bis 8, dadurch gekennzeichnet, daß man das Primärteil nach dem Abkühlen von den Überresten und Reaktionsprodukten der Reaktanden versäubert und die reine Oberfläche mit einem Platinniederschlag versieht.

10. Zahntechnisch-prothetisches Primärteil für das Angußverfahren, dadurch gekennzeichnet, daß es aus einer oxidbildenden Dentallegierung besteht, die in der Angußoberfläche einen erhöhten Gehalt an Bor und/oder Silizium und/oder Phosphor aufweist.

11. Primärteil nach Anspruch 10 in Form eines Wurzelstiftes.

12. Primärteil nach Anspruch 10 in Form eines zahntechnisch-prothetischen Hilfsteils zur Herstellung einer beidseitigen Angußverbindung mit oxidbildenden dentalen Gußlegierungen, bestehend aus einer Platte (1) mit mindestens einem peripher herausragenden Verankerungsarm (3) zur Verankerung in der Einbettmasse.

13. Primärteil nach Anspruch 12, gekennzeichnet durch auf der jeweils anzugießenden Plattenober- und Unterseite befindliche Retentionsvorrichtungen (2a, 2b) zur Vergrößerung der Angußfläche.

14. Primärteil nach Anspruch 13, dadurch gekennzeichnet, daß die Retentionsvorrichtung (2a, 2b) kugelförmig ausgebildet ist.

## Claims

1. Dental prosthetic casting-on method, wherein a metal secondary part is cast onto a metal primary part, characterised by the use of a primary part consisting of an oxide-forming metal alloy, with a reductive metalloid being used to form a solid alloy in the casting-on surface of said primary part before casting on.

2. Method according to claim 1, characterised in that boron, silicon, or phosphorus is made to diffuse into the surface lattice of said primary part as said reductive metalloid.

3. Method according to claim 2, characterised in that the diffusion of said metalloid into the surface of said primary part is aided by use of a halide.

4. Method according to claim 3, characterised in that lithium fluoride (LiF) is utilized as said halide.

5. Method according to claim 2, characterised in that elementary boron or silicon is utilized as said metalloid.

6. Method according to claim 1 and/or 2, characterised in that said metalloid is utilized in the form of a reactive composition.

7. Method according to claim 6, characterised in that as said reactive composition, boride, silicide or phosphide is utilized in the form of an aqueous slurry.

8. Method according to claim 7, characterised in that said metalloid slurry is produced using lithium fluoride solution and applied such as to cover the metallically clean primary part surface in the area of the casting-on zones, and after drying, the primary part prepared in this manner is left to react for one minute in a technical vacuum having up to 20 mbar residual atmospheric pressure, at 900 to 1000°C in the case of NEM alloys and at 600 to 700°C in the case of gold alloys.

9. Method according to any one of claims 1 through 8, characterised in that said primary part is cleansed of remainders and reaction products of the reactants after cooling, and the clean surface is provided with a platinum deposition.

10. Dental prosthetic primary part for the casting-on method, characterised in that it consists of an oxide-forming dental alloy comprising an increased boron and/or silicon and/or phosphorus content in its casting-on surface.

11. Primary part according to claim 10 having the form of a root pin.

12. Primary part according to claim 10 in the form of a dental prosthetic auxiliary part for producing a casting-on connection through oxide-forming dental casting alloys on both of its sides, said primary part consisting of a plate (1) comprising at least one peripherally protruding anchoring arm (3) for anchoring in the embedding mass.

13. Primary part according to claim 12, characterised by retaining devices (2a, 2b) located on the top and bottom side of the plate to be cast on, respectively, for the purpose of enlarging the casting-on surface area.

14. Primary part according to claim 13, characterised in that said retaining device (2a, 2b) is formed to be spherical.

## Revendications

1. Procédé de surmoulage pour prothèses dentaires, dans lequel une partie seconde métallique est moulée sur une partie première métallique, caractérisé par l'utilisation d'une partie première en un alliage métallique formant oxyde, dans la surface de moulage de laquelle un alliage solide est formé, avant le moulage, au moyen d'un métalloïde réductif.

2. Procédé selon la revendication 1, caractérisé en ce que comme ledit métalloïde réductif, on fait diffuser du bore, du silicium, ou du phosphore à l'intérieur du réseau de surface de la partie première.

3. Procédé selon la revendication 2, caractérisé en ce que la diffusion du métalloïde à l'intérieur de la surface de la partie première est aidée au moyen d'un haloïde.

4. Procédé selon la revendication 3, caractérisé par l'utilisation du fluorure de lithium (LiF) comme ledit haloïde.

5. Procédé selon la revendication 2, caractérisé en ce que du bore ou silicium élémentaire est utilisé comme ledit métalloïde.

6. Procédé selon la revendication 1 et/ou 2, caractérisé par l'utilisation dudit métalloïde en forme d'une composition réactive.

7. Procédé selon la revendication 6, caractérisé par l'utilisation du borure, du siliciure ou du phosphure, en forme d'une pâte aqueuse, comme ladite composition réactive.

8. Procédé selon la revendication 7, caractérisé en ce que la pâte de métalloïde est fabriquée en utilisant de la solution de fluorure de lithium et appliquée de manière à recouvrir, dans la région des zones de moulage, la surface pure de la partie première, et après séchage on laisse la partie première ainsi préparée réagir, pendant une minute, dans un vide technique présentant une pression atmosphérique résiduelle de 20 mbar au plus, à une température de 900 à 1000°C dans le cas d'alliages NEM, et 600 à 700°C dans le cas d'alliages d'or.

9. Procédé selon l'une des revendications 1 à 8, caractérisé en ce que après refroidissement, la partie première est nettoyée de restes et produits réactionnels des réactants, et la surface propre est pourvue d'un dépôt de platine.

10. Partie première pour prothèses dentaires pour le procédé de surmoulage, caractérisé par le fait qu'elle est constituée d'un alliage dentaire formant oxyde comprenant, dans sa surface de moulage, une teneur augmentée de bore et/ou de silicium et/ou de phosphore.

11. Partie première selon la revendication 10 en forme d'un pivot de racine.

12. Partie première selon la revendication 10 en forme d'une partie auxiliaire de prothèses dentaires, pour obtenir une connexion des deux côtés par surmoulage au moyen d'alliages dentaires de moulage formants oxyde, cette partie première étant constituée d'un panneau (1) comprenant au moins une branche d'ancrage (3) débordant dans le sens péripherique, en vue de l'ancrage dans la masse d'encastrement.

13. Partie première selon la revendication 12, caractérisée par des dispositifs de rétention (2a, 2b) respectivement positionnés aux faces supérieure et inférieure du panneau à être moulées, pour augmenter la surface de moulage.

14. Partie première selon la revendication 13, caractérisé en ce que ledit dispositif de rétention (2a, 2b) est de forme sphérique.
